# DEMANDE DE BREVET EUROPEEN

(11) **EP 1 562 343 A1**
(43) Date de publication de la demande: **10.08.2005**
(21) Numéro de dépôt: 04290325.2
(22) Date de dépôt: 09.02.2004
(51) Int. Cl.: H04L 29/06

(54) **Procédé et système de gestion d'autorisation d'accès d'un utilisateur au niveau d'un domaine administratif local lors d'une connexion de l'utilisateur à un réseau IP**

(71) Demandeur: FRANCE TELECOM, 75015 Paris (FR)
(72) Inventeur: Carpy, Céline, 92350 Le Plessis Robinson (FR); Morand, Lionel, 92240 Malakoff (FR)
(74) Mandataire: de Roquemaurel, Bruno

(57) **Abrégé**

Pour gérer l'autorisation d'un utilisateur lors d'une tentative d'accès à un réseau de transport IP (5) par l'intermédiaire d'un réseau d'accès (1, 2), un terminal (11, 12, 13) d'utilisateur émet à destination d'un fournisseur d'accès (6, 7, 8) une requête d'accès contenant des données d'authentification de l'utilisateur auprès du fournisseur d'accès, qui est transmise à un serveur d'accès (9) du réseau d'accès (1, 2), en vue d'être adressée à un serveur d'authentification distant (15) du fournisseur d'accès ; sur réception de la requête d'accès, le serveur d'accès (9) émet une requête RADIUS à un serveur proxy (10) du réseau d'accès (1, 2) qui détermine si l'utilisateur doit être authentifié localement, et si tel est le cas, le serveur proxy transmet au serveur d'accès (9) une demande de données d'authentification à adresser au terminal de l'utilisateur, et exécute une procédure d'authentification locale de l'utilisateur, sur la base des données d'authentification fournies par l'utilisateur.

## Description

La présente invention concerne la fourniture de services basés sur un transport IP (Internet Protocol) tels que la connexion au réseau Internet ou la téléphonie sur IP.

Elle s'applique notamment aux architectures basées sur le protocole RADIUS (Remote Authentication Dial In User Service) qui sont largement déployées dans les réseaux IP pour gérer les droits d'accès des utilisateurs et le comptage nécessaire à la facturation de ces derniers pour un domaine administratif donné. Dans ce contexte, un domaine administratif regroupe l'ensemble des équipements réseau gérés par un même administrateur réseau. Ces architectures sont également utilisées pour gérer l'accès aux réseaux des utilisateurs en situation d'itinérance (roaming), c'est-à-dire connectés depuis un réseau appartenant à un domaine administratif différent de celui dont ils dépendent, la gestion de l'autorisation étant alors effectuée entre domaines administratifs.

Dans le cadre des architectures permettant l'accès à des services IP par l'intermédiaire de technologies telles que ADSL (Asymmetric Digital Subscriber Line), WLAN (Wireless Local Area Network), et WAP (Wireless Application Protocol), au moins deux domaines administratifs participent à la gestion d'autorisation d'accès. Il s'agit du domaine administratif local, c'est-à-dire celui auquel l'utilisateur se connecte et d'un domaine administratif distant, c'est-à-dire celui du fournisseur d'accès au réseau IP ou de services auquel il désire accéder. Dans ces architectures, le domaine administratif local joue essentiellement le rôle d'intermédiaire entre l'utilisateur et le domaine administratif de son fournisseur de service.

Le protocole RADIUS qui est conçu essentiellement sur le modèle client/serveur, permet de gérer les droits d'accès d'un utilisateur d'un réseau IP. Dans les architectures mentionnées ci-avant, l'utilisateur se connecte tout d'abord à un serveur d'accès d'un réseau local, ce serveur possédant un client RADIUS chargé de récupérer les informations fournies lors de sa demande d'accès et de transmettre ces informations dans un message de type requête d'accès (Access-Request) à un serveur d'authentification du réseau d'accès, possédant un serveur RADIUS. Le serveur d'authentification assure le traitement des requêtes d'accès en authentifiant les utilisateurs en fonction des informations dont il dispose, et fournit en réponse, soit une autorisation d'accès sous la forme d'un message d'acceptation d'accès (Access-Accept), soit un refus d'accès sous la forme d'un message de refus d'accès (Access-Reject) contenant la raison du refus. Le message d'autorisation d'accès contient toutes les informations nécessaires au serveur d'accès pour fournir le service final à l'utilisateur et notamment les informations sur la configuration d'accès.

En plus des messages mentionnés ci-avant, le protocole RADIUS prévoit également un message de défi d'accès (Access-Challenge) permettant au serveur d'authentification d'envoyer au serveur d'accès une valeur de défi non-prédictible. A la réception d'un tel message, le serveur d'accès demande à l'utilisateur de lui fournir une valeur de réponse obtenue en appliquant à la valeur de défi un algorithme prédéfini. Sur réception de cette réponse, le serveur d'accès émet à destination du serveur d'authentification un nouveau message de requête d'accès contenant la valeur de réponse. Ce nouveau message de requête d'accès est traité par le serveur d'authentification qui y répond en envoyant un message d'acceptation ou de refus d'accès, selon la valeur de réponse fournie par l'utilisateur. Le serveur d'authentification peut également répondre par un message de défi d'accès (Access Challenge)

Si le serveur d'authentification du réseau d'accès, appelé par le serveur d'accès ne dispose pas des informations nécessaires au traitement de la demande d'accès émise par l'utilisateur, il peut s'adresser à un serveur d'authentification approprié en se comportant comme un serveur mandataire (proxy) RADIUS qui ne fait que retransmettre les messages entre le serveur d'accès et un autre serveur d'authentification. Il peut ainsi assurer le rôle d'aiguillage des messages RADIUS qui transitent par lui vers plusieurs serveurs d'authentification. Il peut également assurer la fonction de filtrage de ces messages et en modifier le contenu (par ajout, suppression ou modification des attributs) sans pour autant pouvoir en modifier la nature.

Le rôle d'un serveur proxy RADIUS tel que prévu dans le protocole RADIUS est donc très limité. Or un tel serveur peut avoir besoin d'exercer un contrôle renforcé sur la signalisation et éventuellement déclencher une authentification locale. En particulier, un tel serveur mandataire n'a pas la possibilité d'initier sur réception d'un message de requête d'accès un échange de type défi/réponse avec un client RADIUS, et ce indépendamment d'un serveur d'authentification distant.

Dans de nombreuses applications, il est pourtant souhaitable de pouvoir authentifier un utilisateur non seulement au niveau distant, mais également au niveau local, notamment pour pouvoir proposer aux utilisateurs des services supplémentaires au niveau local, en plus d'un accès à un réseau public tel que le réseau Internet.

La présente invention a pour but de supprimer ces inconvénients. Cet objectif est atteint par la prévision d'un procédé de gestion d'autorisation d'un utilisateur lors d'une tentative d'accès à un réseau de transport IP par l'intermédiaire d'un réseau d'accès, ce procédé comprenant des étapes au cours desquelles :
- un terminal d'utilisateur émet à destination d'un fournisseur d'accès ou de service IP une requête d'accès contenant des données d'authentification de l'utilisateur auprès du fournisseur d'accès ou de service IP, qui est transmise par l'intermédiaire d'un serveur d'accès du réseau d'accès et du réseau de transport IP, en vue d'être adressée à un serveur d'authentification distant du fournisseur d'accès ou de service IP,
- sur réception de la requête d'accès, le serveur d'accès émet une requête RADIUS conforme au protocole RADIUS à un serveur proxy du réseau d'accès,
- sur réception de la requête RADIUS, le serveur proxy émet une demande d'autorisation d'accès au serveur d'authentification distant,
- le serveur d'authentification distant exécute une procédure d'authentification de l'utilisateur, sur la base des données d'authentification contenues dans la requête d'accès, et transmet en réponse au serveur proxy un message de réponse contenant le résultat de la procédure d'authentification de l'utilisateur.

Selon l'invention, ce procédé comprend en outre des étapes au cours desquelles :
- le serveur proxy détermine pour chaque requête RADIUS, reçue du serveur d'accès et correspondant à une requête d'accès émise par un terminal d'utilisateur, si une authentification locale de l'utilisateur émetteur de la requête d'accès, au niveau du réseau local doit être effectuée,
- si une authentification locale de l'utilisateur doit être effectuée, le serveur proxy émet à destination du serveur d'accès une demande de données d'authentification qui est retransmise au terminal de l'utilisateur, reçoit un message de réponse du terminal d'utilisateur par l'intermédiaire du serveur d'accès, et exécute une procédure d'authentification locale de l'utilisateur, sur la base des données d'authentification contenues dans le message de réponse.

Selon un mode de réalisation préféré de l'invention, la demande de données d'authentification émise par le serveur proxy à destination du terminal de l'utilisateur si une authentification locale de l'utilisateur doit être effectuée, est un message de défi contenant un nombre aléatoire.

Avantageusement, le message de défi contient une indication permettant au terminal de l'utilisateur de déterminer qu'il concerne une authentification locale de l'utilisateur.

Selon un mode de réalisation préféré de l'invention, l'authentification distante de l'utilisateur par le serveur d'authentification distant comprend des étapes au cours desquelles :
- le serveur d'authentification distant émet en direction de l'utilisateur un message de défi contenant un nombre aléatoire,
- le serveur proxy retransmet le message de défi émis par le serveur d'authentification distant en direction de l'utilisateur et reçoit dans un message de réponse les données d'authentification de l'utilisateur auprès du serveur d'authentification distant,
- le serveur proxy retransmet au serveur d'authentification distant le message de réponse émis par le terminal de l'utilisateur,
- le serveur proxy reçoit du serveur d'authentification distant un message de résultat de l'authentification de l'utilisateur.

Selon un mode de réalisation préféré de l'invention, le serveur proxy détermine quels droits d'accès attribuer à l'utilisateur en fonction du résultat des authentifications locale et distante de l'utilisateur.

L'invention concerne également un système de gestion d'autorisation d'un utilisateur lors d'une tentative d'accès d'un terminal d'utilisateur à un fournisseur d'accès ou de service IP par l'intermédiaire d'un réseau de transport IP, le système comprenant :
- des réseaux d'accès auxquels sont connectés les terminaux d'utilisateurs,
- des passerelles IP assurant la liaison respectivement entre les réseaux d'accès et le réseau de transport IP,
- au moins un serveur d'accès par réseau d'accès, conçu pour émettre à la demande des terminaux d'utilisateur des requêtes d'accès RADIUS conformes au protocole RADIUS,
- au moins un serveur d'authentification distant pour chacun des fournisseurs d'accès ou de service IP, conçu pour authentifier les utilisateurs en fonction de données d'authentification contenues dans des requêtes d'accès reçues par le serveur d'authentification, et
- un serveur proxy connecté au réseau de transport IP conçu pour retransmettre chaque requête d'accès RADIUS, émise par l'un des serveurs d'accès à la demande d'un utilisateur, vers un serveur d'authentification distant de fournisseur d'accès ou de service IP indiqué dans la requête d'accès, et retransmettre vers les serveurs d'accès les réponses d'authentification fournies par les serveurs d'authentification distant.

Selon l'invention, le serveur proxy comprend :
- des moyens pour déterminer pour chaque requête d'accès RADIUS reçue d'un serveur d'accès à la demande d'un utilisateur, si une authentification locale de l'utilisateur émetteur de la requête d'accès doit ou non être effectuée au niveau du réseau local,
- des moyens pour émettre par l'intermédiaire d'un serveur d'accès à destination d'un terminal d'utilisateur devant être authentifié localement, un message de demande de données d'authentification, et pour recevoir en réponse du terminal d'utilisateur un message de réponse contenant les données d'authentification demandées, et
- des moyens pour exécuter une procédure d'authentification locale de l'utilisateur, sur la base des informations d'authentification contenues dans le message de réponse.

Selon un mode de réalisation préféré de l'invention, le serveur proxy comprend en outre des moyens pour déterminer un résultat global d'authentification en fonction du résultat de l'authentification locale de l'utilisateur et de la réponse d'authentification de l'utilisateur fournie par le serveur d'authentification, et pour retransmettre le résultat global d'authentification vers le serveur d'accès.

Selon un mode de réalisation préféré de l'invention, chaque serveur d'accès comprend un client RADIUS et le serveur proxy comprend un client et un serveur RADIUS, pour échanger des messages conformes au protocole RADIUS.

Selon un mode de réalisation préféré de l'invention, le message de demande de données d'authentification émis par le serveur proxy pour authentifier localement l'utilisateur est un message de défi, le serveur proxy comportant des moyens pour générer un nombre aléatoire qui est inséré dans le message de défi, et des moyens pour vérifier la réponse au message de défi reçue du terminal de l'utilisateur.

Selon un mode de réalisation préféré de l'invention, le serveur proxy comprend des moyens pour déterminer quels droits d'accès attribuer à l'utilisateur en fonction du résultat des authentifications locale et distante de l'utilisateur.

Un mode de réalisation préféré de l'invention sera décrit ci-après, à titre d'exemple non limitatif, avec référence aux dessins annexés dans lesquels :
La figure 1 représente schématiquement l'architecture d'un système de fourniture de services basés sur un transport IP, selon l'invention ;
Les figures 2a et 2b représentent un diagramme de séquencement d'étapes qui sont exécutées dans le système représenté sur la figure 1, conformément au procédé selon l'invention.

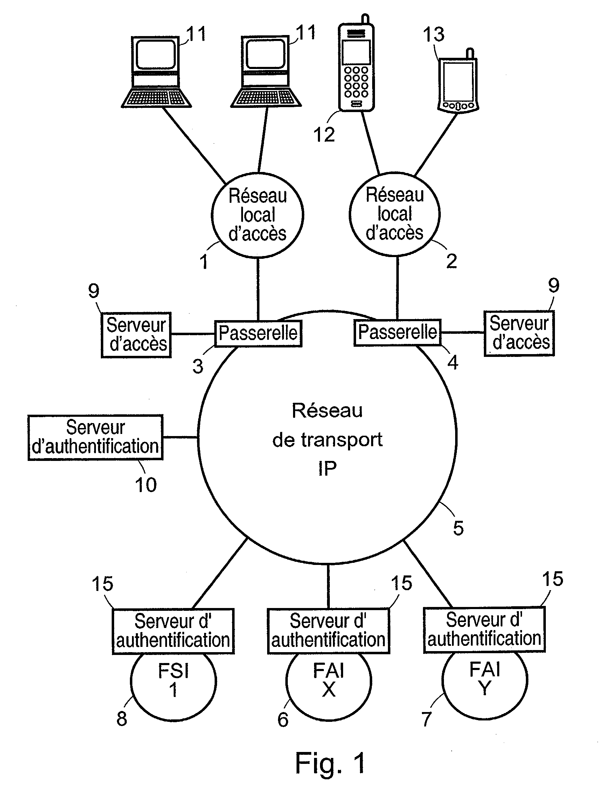

Le système représenté sur la figure 1 comprend des réseaux d'accès 1, 2 auxquels sont connectés des terminaux 11, 12, 13 d'utilisateurs. Ces réseaux d'accès 1, 2 fournissent aux terminaux un accès à un réseau de transport IP 5 par l'intermédiaire de passerelles IP 3, 4, respectives adaptées au réseau d'accès. Le réseau de transport IP 5 permet aux utilisateurs d'accéder à un fournisseur d'accès Internet 6, 7 ou à un fournisseur de services IP 8.

Selon l'invention, ce système comprend en outre des serveurs d'accès 9 connectés respectivement aux réseaux locaux 1, 2, auxquels les utilisateurs souhaitant accéder au réseau IP doivent se connecter, et un serveur proxy d'authentification 10 connecté au réseau de transport IP 5 et auquel chaque serveur d'accès 9 transmet les requêtes d'accès émises par les terminaux 11, 12, 13.

Chaque serveur d'accès 9 est conçu pour recevoir toutes les requêtes d'accès à un fournisseur 6, 7, 8 d'accès ou de service, émises par les utilisateurs sur le réseau local 1, 2 correspondant, et d'aiguiller ces requêtes par l'intermédiaire d'une passerelle 3, 4 au travers du réseau de transport IP vers le fournisseur 6, 7, 8 d'accès ou de service indiqué dans la requête par le terminal de l'utilisateur, chaque fournisseur d'accès ou de service disposant d'un serveur d'authentification 15.

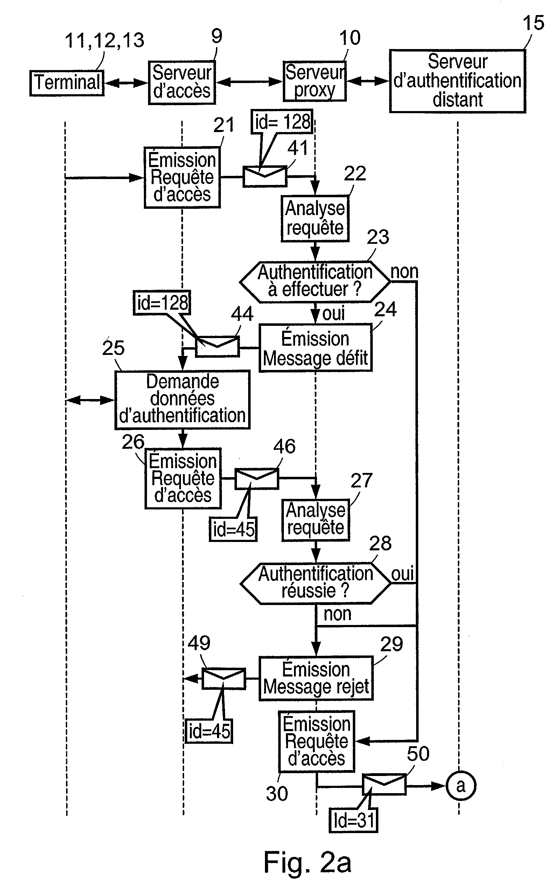

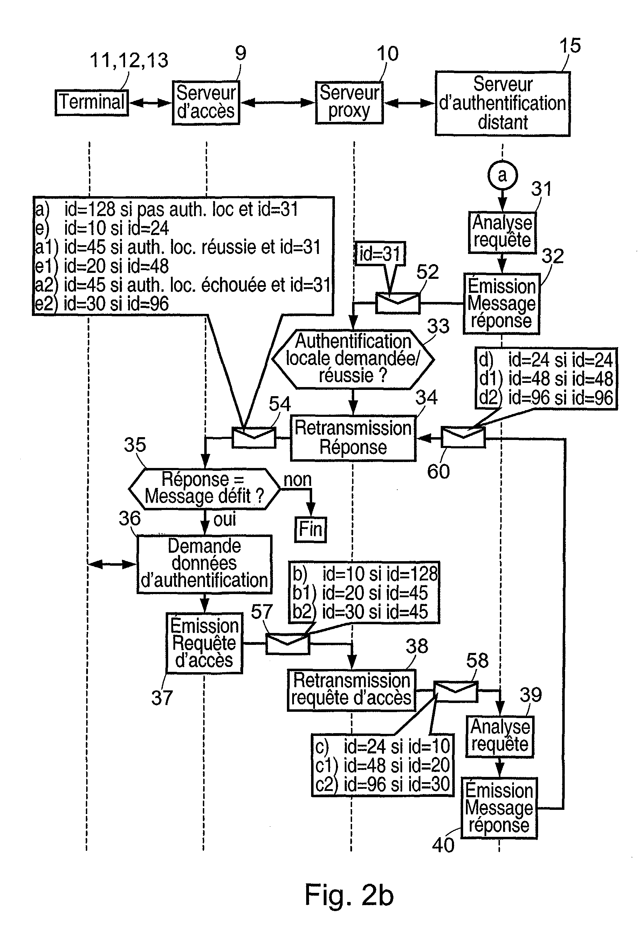

Lorsqu'un terminal d'utilisateur 11, 12, 13 tente d'accéder au réseau local, le logiciel de navigation Internet est par exemple automatiquement redirigé vers un serveur Web jouant le rôle de serveur d'accès 9 qui exécute la procédure d'authentification d'accès illustrée sur les figures 2a et 2b.

Cette procédure est conforme au protocole RADIUS. Ainsi, le serveur d'accès 9 intègre un client RADIUS pour pouvoir recevoir des messages RADIUS et y répondre. Le serveur proxy 10 possède également toutes les fonctionnalités d'un proxy tel que décrit dans la norme RADIUS.

Dans toute la description qui suit de la procédure d'authentification, les identifiants de messages ou requêtes RADIUS employés sont donnés à titre d'exemple. Dans la norme RADIUS le terme "type" détermine la nature du message.

A la première étape 21, le serveur d'accès 9 émet à destination du serveur proxy d'authentification 10 situé dans le domaine administratif local, une requête d'accès 41 du type RADIUS Access-Request comportant un identifiant égal à 128. A la réception d'un tel message à l'étape 22, le serveur proxy 10 mémorise et analyse le contenu de ce message pour déterminer si l'utilisateur doit être authentifié localement (étape 23).
Ainsi, une authentification locale peut par exemple être déclenchée si la requête d'accès provient d'un réseau local particulier, ou en fonction d'informations d'identification de l'utilisateur contenues dans la requête.

Si l'utilisateur doit être authentifié localement, le serveur proxy 10 émet à destination du serveur d'accès 9 à l'étape 24 un message de défi 44 du type RADIUS Access-Challenge comportant un identifiant égal à 128. Ce message contient également une valeur non prédictible par exemple générée aléatoirement par le serveur proxy 10 ou par un équipement distinct qui peut être un centre d'authentification, et un attribut précisant l'origine du message, à savoir le domaine administratif local. A cet effet, on peut utiliser les attributs de type "Vendor-Specific", ou les attributs "State" ou "Reply-Message" prévus par le protocole RADIUS.

A l'étape suivante 25, le serveur d'accès 9 reçoit le message de défi 44, identifie l'émetteur du message à l'aide de l'attribut précisant l'origine du message, et donc demande à l'utilisateur de lui fournir une réponse à la demande d'authentification locale. Cette réponse peut contenir une valeur de réponse obtenue en appliquant à la valeur aléatoire contenue dans le message de défi un algorithme de cryptage prédéfini faisant intervenir une clé secrète propre à l'utilisateur, le serveur proxy disposant de moyens pour déterminer si la valeur de réponse correspond à la valeur aléatoire et à la clé secrète de l'utilisateur.

A l'étape suivante 26, le serveur d'accès transmet au serveur proxy 10 une nouvelle requête d'accès 46 contenant la réponse à la demande d'authentification locale, du type RADIUS Access-Request contenant un identifiant égal à 45.

A l'étape suivante 27, le serveur proxy 10 reçoit du serveur d'accès la réponse à l'authentification locale, fournie par l'utilisateur, la vérifie et la mémorise. Si à l'étape suivante 28, la réponse est invalide (l'authentification locale a échoué), le serveur proxy peut refaire une tentative d'authentification en reprenant la procédure à l'étape 24. Si l'authentification locale de l'utilisateur n'a pas réussi à l'issue d'un nombre prédéfini de tentatives, le serveur proxy 10 peut selon la politique d'administration locale, envoyer à l'utilisateur par l'intermédiaire du serveur d'accès 9 un message de rejet du type RADIUS Access-Reject, ou poursuivre la procédure à l'étape 30 pour permettre à l'utilisateur d'être authentifié par un serveur d'authentification distant 15 mis en oeuvre par un fournisseur d'accès ou de services auquel l'utilisateur veut accéder.

Si à l'étape 23 l'utilisateur ne doit pas être authentifié localement, la procédure se poursuit également à l'étape 30. A cette étape, le serveur proxy 10 émet à destination d'un serveur d'authentification distant 15 auprès duquel l'utilisateur souhaite être authentifié, une requête d'accès 50, du type RADIUS Access-Request contenant un identifiant égal à 31, si le serveur 15 est de type RADIUS. Ce message est constitué à partir des informations contenues dans la requête d'accès 41 mémorisée par le serveur proxy 10 à l'étape 22.

A l'étape suivante 31, le serveur d'authentification distant 15 reçoit et analyse ce message pour déterminer le droit d'accès au service demandé par l'utilisateur. A l'étape suivante 32, le serveur d'authentification émet un message de réponse 52 qui peut être un message d'acceptation, de rejet ou de défi, selon les informations d'authentification contenues dans le message 50 reçu. Ainsi, conformément au protocole RADIUS, le message 52 peut être de type Access-Accept, Access-Reject ou Access-Challenge et contient un identifiant égal à 31 correspondant à l'identifiant du message 50 reçu.

Les étapes suivantes de la procédure dépendent de deux conditions (étape 33), à savoir si l'authentification locale de l'utilisateur a été demandée au préalable ou non, et si l'authentification locale a été demandée, si celle-ci a réussi ou échoué.

Si l'authentification n'a pas été demandée au préalable, le serveur proxy 10 qui reçoit le message 52, traite ce message à l'étape 34 et envoie un message 54 au serveur d'accès 9. Ce message 54 correspond à une réponse au message 41 émis à l'étape 21 par le serveur d'accès. Ces messages comportent par exemple l'identifiant 128 (cas a) dans la figure 2b). Ainsi, si le message 52 émis par le serveur d'authentification distant 15 est un message d'acceptation (RADIUS Access-Accept), le serveur proxy 10 renvoie au serveur d'accès 9 un message d'acceptation (RADIUS Access-Accept). Si le message 52 émis par le serveur d'authentification distant 15 est un message de refus (RADIUS Access-Reject), le serveur proxy 10 renvoie au serveur d'accès 9 un message de refus (RADIUS Access-Reject) ou un message d'acceptation selon la politique locale du serveur proxy. Le message 52 peut également être un message de défi si l'authentification de l'utilisateur par le serveur d'authentification distant 15 a échoué, ou si ce dernier a besoin de davantage d'informations d'authentification ou souhaite appliquer un mécanisme dynamique d'authentification. Dans ce cas, le message 54 transmis au serveur d'accès est un message de défi (RADIUS Access-Challenge).

A la réception du message 54 à l'étape 35, le serveur d'accès analyse le contenu du message, et s'il s'agit d'un message d'acceptation ou de refus, la procédure d'authentification prend fin et le serveur d'accès configure l'accès de l'utilisateur au réseau local 1, 2, et au réseau IP 5 en fonction de la réponse du serveur proxy 10. Si le message 54 est un message de défi, le serveur d'accès demande à l'utilisateur à l'étape 36 de fournir une réponse à la demande d'authentification du domaine administratif distant. A l'étape suivante 37, le serveur d'accès constitue une requête d'accès 57 contenant la réponse de l'utilisateur et l'envoie au serveur proxy 10. Cette requête d'accès est un message RADIUS Access-Request avec un identifiant égal à 10 (cas b) dans la figure 2b).

A l'étape suivante 38, le serveur proxy reçoit le message 57 et le retransmet au serveur d'authentification distant 15 dans un message de requête 58, sous la forme d'un message RADIUS du type Access-Request avec un identifiant égal à 24 (cas c) dans la figure 2b). A l'étape suivante 39, le serveur 15 reçoit et analyse le contenu du message 58 et émet à l'étape 40 suivante un message de réponse 60 dont le contenu dépend de la réussite de l'authentification effectuée par le serveur 15. Ce message conserve l'identifiant 24 (cas d) dans la figure 2b). Ainsi, le message 60 peut être un message d'acception (RADIUS Access-Accept), de refus (RADIUS Access-Reject) ou un nouveau message de défi (RADIUS Access-Challenge)

La procédure d'authentification reprend ensuite à partir de l'étape 34 au cours de laquelle le serveur proxy 10 traite et retransmet le message 60 reçu au serveur d'accès sous la forme d'un message 54. L'identifiant du message 60 reçu, égal à 24, est remplacé par 10 pour correspondre à celui 57 émis par le serveur d'accès 9 (cas e) dans la figure 2b).

La procédure d'authentification se termine à l'étape 35 si le message 54 qui est transmis au serveur d'accès 9 est un message d'acceptation ou de refus et contient le résultat de l'authentification effectuée par le serveur d'authentification distant 15 (pas d'authentification locale). Si par contre le message 54 est un nouveau message de défi, la procédure se poursuit à l'étape 36.

Si à l'étape 33, l'authentification locale a été demandée et a réussi, la procédure comprenant les étapes 34 à 40 est également exécutée, mais avec des messages contenant des numéros d'identification différents (messages correspondants aux cas a1) à e1) dans la figure 2b). Ainsi, le message 52 contenant l'identifiant 31 est transformé à l'étape 34 par le serveur proxy en un message 54 contenant l'identifiant 45 et le résultat de l'identification locale. A l'étape 37, l'identifiant 45 du message 57 devient 20. A l'étape suivante 38, l'identifiant 20 du message 58 devient 48. A l'étape 40, l'identifiant 48 reste inchangé. A l'étape suivante 34, l'identifiant 48 du message devient 20.

La procédure d'authentification se termine à l'étape 35 si le message 54 qui est transmis au serveur d'accès 9 est du type acceptation ou refus, contenant un attribut précisant le résultat des authentifications locale (réussite) et distante. Si par contre le message 54 est un nouveau message de défi, la procédure se poursuit à l'étape 36.

A l'issue de la procédure d'authentification, si l'authentification distante a réussi, le message 54 est de type acceptation, et si elle a échoué, ce message peut être de type acceptation ou refus selon la politique d'administration locale.

Si à l'étape 33, l'authentification locale a été demandée et a échoué, la procédure comportant les étapes 34 à 40 est également exécutée, avec des messages contenant des numéros d'identification différents (messages correspondants aux cas a2) à e2) dans la figure 2b). Ainsi, le message 52 contenant l'identifiant 31 est transformé à l'étape 34 par le serveur proxy en un message 54 contenant l'identifiant 45 et le résultat de l'identification locale. A l'étape 37, l'identifiant 45 du message 57 devient 30. A l'étape suivante 38, l'identifiant 30 du message 58 devient 96. A l'étape 40, l'identifiant 96 reste inchangé. A l'étape suivante 34, l'identifiant 96 du message devient 30.

La procédure d'authentification se termine à l'étape 35 si le message 54 qui est transmis au serveur d'accès 9 est du type acceptation ou refus, contenant un attribut précisant le résultat des authentifications locale (échec) et distante. Si par contre le message 54 est un nouveau message de défi, la procédure se poursuit à l'étape 36.

A l'issue de la procédure d'authentification, le message 54 qui est envoyé au serveur d'accès 9 peut être de type acceptation (même si les authentifications locale et distante ont échoué) ou refus selon la politique d'administration locale.

En fonction du résultat de la procédure d'authentification, le serveur d'accès 9 configure ensuite l'accès de l'utilisateur d'une manière adéquate et peut l'informer sur le type de connexion à laquelle il a droit.

Grâce à ces dispositions, les procédures locale et distante d'authentification d'un utilisateur sont totalement indépendantes. Chaque domaine administratif est donc totalement libre d'imposer ou non une procédure d'authentification.

Dans un mode de réalisation de l'invention, on utilise deux attributs du type "Vendor Specific" des messages RADIUS prévus dans le protocole. Le premier de ces deux attributs appelé "Local_Challenge" est inclus dans les messages de défi envoyés par le serveur proxy 10 au serveur d'accès 9. Cet attribut est utilisé pour indiquer au serveur d'accès si oui ou non il est à l'origine du message. En fonction de la présence ou non de cet attribut, le serveur d'accès précise à l'utilisateur s'il s'agit d'une authentification locale ou distante pour obtenir une réponse adéquate à un message de défi.
Le second attribut appelé "Auth_Status" est inclus dans les messages d'acceptation envoyés par le serveur proxy pour clôturer la procédure d'authentification de l'utilisateur et pour indiquer au serveur d'accès les résultats d'authentification locale et distante.

Cette procédure est parfaitement adaptée à un accès au réseau Internet par l'intermédiaire d'un réseau local ouvert de type WLAN, par exemple Wi-Fi, dont l'accès est contrôlé par son propriétaire. Ce réseau local peut proposer des services locaux, tels que des services de fourniture d'informations sur le lieu où le réseau local est accessible, par exemple des plans, des listes d'adresses utiles, etc. Pour accéder au réseau Internet, les utilisateurs qui se connectent à ce réseau local doivent en outre procéder à une demande d'accès auprès de leur fournisseur d'accès.

Lorsqu'un utilisateur muni d'un terminal se trouve dans la zone de couverture du réseau local WLAN, et qu'il lance le logiciel de navigation, celui-ci est automatiquement redirigé sur un serveur Web du serveur d'accès local 9. Dans une page d'accueil du serveur Web, les utilisateurs sont invités à introduire un identifiant et un mot de passe d'accès au réseau local s'ils en ont un. S'ils souhaitent accéder au réseau Internet, ils doivent sélectionner un fournisseur d'accès dans une liste, puis introduire un identifiant et un mot de passe d'accès correspondant au fournisseur d'accès sélectionné.
Les informations saisies par l'utilisateur sont transmises par le serveur d'accès 9 au serveur proxy 10 du réseau local.

Si l'utilisateur a introduit un identifiant et un mot de passe d'accès au réseau local, le serveur proxy 10 du réseau local déclenche la procédure d'identification locale et garde en mémoire le résultat de cette authentification. Puis il déclenche la procédure d'authentification de l'utilisateur auprès du serveur d'authentification 15 du fournisseur d'accès sélectionné par l'utilisateur.

Selon le résultat des authentifications locale et distante, le serveur proxy envoie un message d'acceptation, ou de refus si les authentifications locale et distante ont toutes les deux échoué. Dans ce dernier cas, le serveur d'accès n'autorise pas l'utilisateur à accéder à des services locaux ou distants.
Si l'utilisateur a été authentifié uniquement localement ou uniquement auprès du fournisseur d'accès, le serveur d'accès ne lui donne accès qu'aux services correspondants. Et si les deux authentifications ont réussi, le serveur d'accès donne accès à l'utilisateur à la fois aux services locaux et distants.

De même, si l'utilisateur n'a pas demandé une authentification locale, seule une authentification distante est effectuée, et si celle-ci réussit, le serveur d'accès lui configure un accès au réseau Internet.

La qualité de service QoS attribuée à l'utilisateur dans le réseau local peut également être adaptée par le serveur d'accès 9 en fonction du résultat de l'authentification locale.

## Revendications

1. Procédé de gestion d'autorisation d'un utilisateur lors d'une tentative d'accès à un réseau de transport IP (5) par l'intermédiaire d'un réseau d'accès (1, 2), ce procédé comprenant des étapes au cours desquelles :
- un terminal (11, 12, 13) d'utilisateur émet à destination d'un fournisseur d'accès ou de service IP (6, 7, 8) une requête d'accès contenant des données d'authentification de l'utilisateur auprès du fournisseur d'accès ou de service IP, qui est transmise par l'intermédiaire d'un serveur d'accès (9) du réseau d'accès (1, 2) et du réseau de transport IP (5), en vue d'être adressée à un serveur d'authentification distant (15) du fournisseur d'accès ou de service IP,
- sur réception de la requête d'accès, le serveur d'accès (9) émet une requête RADIUS conforme au protocole RADIUS à un serveur proxy (10) du réseau d'accès (1, 2),
- sur réception de la requête RADIUS, le serveur proxy émet une demande d'autorisation d'accès au serveur d'authentification distant (15),
- le serveur d'authentification distant (15) exécute une procédure d'authentification de l'utilisateur, sur la base des données d'authentification contenues dans la requête d'accès, et transmet en réponse au serveur proxy un message de réponse contenant le résultat de la procédure d'authentification de l'utilisateur,
**caractérisé en ce qu'**il comprend en outre des étapes au cours desquelles :
- le serveur proxy détermine pour chaque requête RADIUS, reçue du serveur d'accès (9) et correspondant à une requête d'accès émise par un terminal d'utilisateur, si une authentification locale de l'utilisateur émetteur de la requête d'accès, au niveau du réseau local (1, 2) doit être effectuée,
- si une authentification locale de l'utilisateur doit être effectuée, le serveur proxy émet à destination du serveur d'accès (9) une demande de données d'authentification qui est retransmise au terminal de l'utilisateur, reçoit un message de réponse du terminal d'utilisateur par l'intermédiaire du serveur d'accès, et exécute une procédure d'authentification locale de l'utilisateur, sur la base des données d'authentification contenues dans le message de réponse.

2. Procédé selon la revendication 1,
**caractérisé en ce que** la demande de données d'authentification émise par le serveur proxy (10) à destination du terminal de l'utilisateur (11, 12, 13) si une authentification locale de l'utilisateur doit être effectuée, est un message de défi contenant un nombre aléatoire.

3. Procédé selon la revendication 2,
**caractérisé en ce que** le message de défi contient une indication permettant au terminal de l'utilisateur de déterminer qu'il concerne une authentification locale de l'utilisateur.

4. Procédé selon l'une des revendications 1 à 3,
**caractérisé en ce que** l'authentification distante de l'utilisateur par le serveur d'authentification distant (15) comprend des étapes au cours desquelles :
- le serveur d'authentification distant émet en direction de l'utilisateur un message de défi contenant un nombre aléatoire,
- le serveur proxy (10) retransmet le message de défi émis par le serveur d'authentification distant en direction de l'utilisateur et reçoit dans un message de réponse les données d'authentification de l'utilisateur auprès du serveur d'authentification distant,
- le serveur proxy (10) retransmet au serveur d'authentification distant le message de réponse émis par le terminal de l'utilisateur,
- le serveur proxy (10) reçoit du serveur d'authentification distant un message de résultat de l'authentification de l'utilisateur.

5. Procédé selon l'une des revendications 1 à 4,
**caractérisé en ce que** le serveur proxy (10) détermine quels droits d'accès attribuer à l'utilisateur en fonction du résultat des authentifications locale et distante de l'utilisateur.

6. Système de gestion d'autorisation d'un utilisateur lors d'une tentative d'accès d'un terminal d'utilisateur à un fournisseur d'accès ou de service IP (6, 7, 8) par l'intermédiaire d'un réseau de transport IP (5), le système comprenant :
- des réseaux d'accès (1, 2) auxquels sont connectés les terminaux d'utilisateurs,
- des passerelles IP (3, 4) assurant la liaison respectivement entre les réseaux d'accès (1, 2) et le réseau de transport IP (5),
- au moins un serveur d'accès (9) par réseau d'accès, conçu pour émettre à la demande des terminaux d'utilisateur des requêtes d'accès RADIUS conformes au protocole RADIUS,
- au moins un serveur d'authentification distant (15) pour chacun des fournisseurs d'accès ou de service IP (6, 7, 8), conçu pour authentifier les utilisateurs en fonction de données d'authentification contenues dans des requêtes d'accès (50, 58) reçues par le serveur d'authentification, et
- un serveur proxy (10) connecté au réseau de transport IP conçu pour retransmettre chaque requête d'accès RADIUS, émise par l'un des serveurs d'accès (9) à la demande d'un utilisateur, vers un serveur d'authentification distant (15) de fournisseur d'accès ou de service IP indiqué dans la requête d'accès, et retransmettre vers les serveurs d'accès les réponses d'authentification fournies par les serveurs d'authentification distant (15),
**caractérisé en ce que** le serveur proxy (10) comprend :
- des moyens pour déterminer pour chaque requête d'accès RADIUS reçue d'un serveur d'accès (9) à la demande d'un utilisateur, si une authentification locale de l'utilisateur émetteur de la requête d'accès doit ou non être effectuée au niveau du réseau local (1, 2),
- des moyens pour émettre par l'intermédiaire d'un serveur d'accès à destination d'un terminal d'utilisateur devant être authentifié localement, un message de demande de données d'authentification, et pour recevoir en réponse du terminal d'utilisateur un message de réponse contenant les données d'authentification demandées, et
- des moyens pour exécuter une procédure d'authentification locale de l'utilisateur, sur la base des informations d'authentification contenues dans le message de réponse.

7. Système selon la revendication 6,
**caractérisé en ce que** le serveur proxy (10) comprend en outre des moyens pour déterminer un résultat global d'authentification en fonction du résultat de l'authentification locale de l'utilisateur et de la réponse d'authentification de l'utilisateur fournie par le serveur d'authentification (15), et pour retransmettre le résultat global d'authentification vers le serveur d'accès (9).

8. Système selon la revendication 6 ou 7,
**caractérisé en ce que** chaque serveur d'accès (9) comprend un client RADIUS et le serveur proxy comprend un client et un serveur RADIUS, pour échanger des messages conformes au protocole RADIUS.

9. Système selon l'une des revendications 6 à 8,
**caractérisé en ce que** le message de demande de données d'authentification émis par le serveur proxy (10) pour authentifier localement l'utilisateur est un message de défi, le serveur proxy comportant des moyens pour générer un nombre aléatoire qui est inséré dans le message de défi, et des moyens pour vérifier la réponse au message de défi reçue du terminal de l'utilisateur.

10. Système selon l'une des revendications 6 à 9,
**caractérisé en ce que** le serveur proxy (10) comprend des moyens pour déterminer quels droits d'accès attribuer à l'utilisateur en fonction du résultat des authentifications locale et distante de l'utilisateur.
